# EUROPÄISCHE PATENTSCHRIFT

(11) **EP 2 453 690 B1**
(45) Veröffentlichungstag und Bekanntmachung des Hinweises auf die Patenterteilung: **14.09.2016**
(21) Anmeldenummer: 11186814.7
(22) Anmeldetag: 27.10.2011
(51) Int. Cl.: H04W 16/14, H04W 88/06

(54) **Verfahren zur gemeinsamen Nutzung eines Frequenzbandes durch ein Mobilfunksystem und ein RFID-System**
Method for joint use of a frequency band by a mobile radio system and an RFID system
Procédé d'utilisation commune d'une bande de fréquence par un système radio mobile et un système RFID

(30) Priorität: 12.11.2010 DE 102010060513
(43) Veröffentlichungstag der Anmeldung: 16.05.2012
(73) Patentinhaber: Feig Electronic GmbH, 35781 Weilburg (DE)
(72) Erfinder: Desch, Markus, 65527 Niedernhausen (DE)
(74) Vertreter: Knefel, Cordula

(56) Entgegenhaltungen:
- US-A1- 2008 309 490
- US-A1- 2010 207 737
- "3rd Generation Partnership Project; Technical Specification Group GSM/EDGE Radio Access Network; Mobile radio interface layer 3 specification; Radio Resource Control (RRC) protocol (Release 9)", 3GPP STANDARD; 3GPP TS 44.018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.1.0, 1. Mai 2009 (2009-05-01), Seiten 1-422, XP050378563,

## Beschreibung

Die Erfindung beschreibt ein Verfahren zur gemeinsamen Nutzung eines Frequenzbandes durch ein Mobilfunksystem und ein UHF (Ultra-High-Frequency) RFID-(Radio Frequency Identification) System.

Insbesondere betrifft die Erfindung ein Verfahren für den Betrieb einer RFID-Schreib-/Lesestation, die in einem Frequenzband mit mehreren Sendekanälen in Koexistenz mit Mobilfunksystemen arbeiten kann und dabei in der Lage ist zu erkennen, welche Frequenzkanäle durch ein Mobilfunksystem temporär oder permanent verwendet werden.

Das Mobilfunksystem ist dabei der primäre Nutzer des Frequenzbandes und das RFID-System ist der sekundäre Nutzer desselben Teiles eines Frequenzbandes.

Als Mobilfunksystem wird beispielsweise das GSM- (Global System for Mobile Communications) basierte Funksystem verwendet. Es können jedoch auch alle weiteren gängigen Mobilfunkstandards, wie beispielsweise HSCSD (High Speed Circuit Switched Data), GPRS (General Packet Radio Service), EDGE (Enhanced Data Rates for GSM Evolution), UMTS (Universal Mobile Telecommunications System) etc. verwendet werden, die im UHF-Frequenzband betrieben werden.

Für Funksysteme nach dem Stand der Technik sind Frequenzbänder definiert, welche durch eine untere und eine obere Frequenz bestimmt sind. Um den Parallelbetrieb mehrerer Funksysteme zu ermöglichen, wird ein Frequenzband in eine Mehrzahl von Frequenzkanälen unterteilt, wobei jeder Frequenzkanal wiederum durch eine untere Grenzfrequenz f1 und eine obere Grenzfrequenz f2 definiert ist.

Bei Mobilfunksystemen wird unterschieden zwischen Frequenzkanälen und logischen Kanälen. Dabei können logische Kanäle auf einem beliebigen Frequenzkanal liegen. Ein logischer Kanal ist durch die Information, die er überträgt, beschrieben. Für die Vielzahl unterschiedlicher logischer Kanäle existieren Definitionen, welche Informationen in welchem Datenrahmen und welcher Häufigkeit übertragen werden. Der Frequenzkanal dient dabei zur physikalischen Übertragung der Informationen eines logischen Kanales.

Ein Mobilfunksystem kann mehrere Frequenzkanäle gleichzeitig benutzen, wobei das Mobilfunksystem immer einen Frequenzkanal besitzt, auf dem das System dauerhaft sendet (kontinuierlich benutzter Frequenzkanal), und der als logischer Broadcast-Kanal zum Beispiel BCCH (Broadcast Control Channel) benutzt wird. Ferner nutzen Mobilfunksysteme weitere Frequenzkanäle, die nur temporär benutzt werden, wie beispielsweise bei den logischen GSM-Kanälen TCH (Traffic Channel), die für die Daten- und/oder Sprachübertragung zwischen einem mobilen Gerät und einer Basisstation des Mobilfunksystems genutzt werden.

Ein RFID-System besteht gemäß dem Stand der Technik aus einer RFID-Schreib-/Lesestation, an die eine RFID-Antenne angeschlossen ist, und mindestens einem Transponder. Die RFID-Antenne kann dabei auch eine bauliche Einheit mit der RFID-Schreib-/Lesestation bilden und dient dazu, Sendesignale und Energie an den Transponder zu emittieren und Antwortsignale von dem Transponder zu empfangen.

Das RFID-System nutzt das gemeinsame Frequenzband mit dem Mobilfunksystem, indem es aus der Vielzahl der vom Mobilfunksystem potenziell genutzten Kanäle die Kanäle ermittelt, die an dem bestimmten Ort, an dem das RFID-System arbeitet, nicht vom Mobilfunksystem benutzt werden.

Damit ein RFID-System als Sekundärnutzer einen Kanal nutzen kann, der auch von dem Primärnutzer, dem Mobilfunksystem, genutzt werden könnte, muss das RFID-System ermitteln, welcher der Mobilfunkkanäle an dem Ort, an dem das RFID-System benutzt werden soll, durch ein Mobilfunksystem benutzt werden könnte. Hierbei gilt der Mobilfunkkanal für das RFID-System dann als benutzt, wenn der Betrieb des RFID-Systems eine Störung im Mobilfunksystem verursachen würde. Dies bedeutet: Wenn vom RFID-System ein Mobilfunkkanal erkannt wird, muss auch festgestellt werden, mit welcher RF-Leistung der Kanal am RFID-System erkannt wird, um daraus zu ermitteln, ob sich das RFID-System innerhalb eines Abdeckungsbereiches einer Mobilfunk-Zelle befindet.

Die Ermittlung der Frequenzkanäle, die durch das Mobilfunksystem dauerhaft, zum Beispiel durch einen BCCH benutzt werden, ist relativ einfach, da der zum BCCH gehörende Frequenzkanal dauerhaft (24 Stunden) benutzt wird. Ein RFID-System kann beispielsweise beim Einschalten der RFID-Schreib-/Lesestation feststellen, ob solche dauerhaft benutzten Kanäle im Frequenzband der gemeinsamen Nutzung zwischen Mobilfunksystem und RFID-System vorkommen, indem es überprüft, ob und auf welchen Kanälen ein definierter Empfangspegel überschritten wird. Wird bei dieser Überprüfung vom RFID-System ein benutzter Kanal erkannt, ist für das RFID-System bekannt, dass dieser Kanal und eventuell auch direkt benachbarte Kanäle nicht durch das RFID-System benutzt werden dürfen.

Die Ermittlung, welche Kanäle durch das Mobilfunksystem nur temporär verwendet werden, ist hingegen nicht durch einfaches Prüfen eines Empfangspegels auf einem Frequenzkanal möglich, da die Wahrscheinlichkeit, dass zum Zeitpunkt der Prüfung der temporäre Kanal überhaupt nicht aktiv ist, sehr groß ist.

Um die temporär benutzten Kanäle sicher zu erkennen, müsste das RFID-System die Vielzahl der Frequenzkanäle ständig überwachen. Diese ständige Überwachung ist aufwändig, da eine Vielzahl von Frequenzkanälen gleichzeitig überwacht werden müsste und die Überwachung der Frequenzkanäle des Mobilfunksystems gleichzeitig zur Kommunikation mit dem Transponder stattfinden muss. Dies wiederum bedeutet, dass ein RFID-System beziehungsweise eine Schreib-/Lesestation eines RFID-Systems zusätzlich zu den Ressourcen, die zur Transponder-Kommunikation benötigt werden, weitere Ressourcen zur permanenten Überwachung der temporären Mobilfunkkanäle benötigen würden. Weitere Ressourcen können zusätzliche Hardware beispielsweise in Form eines anderen oder eines weiteren Empfängers oder auch zusätzliche Ressourcen in Form von mehr Geschwindigkeit in der digitalen Signalverarbeitung, zur gleichzeitigen Auswertung von RFID-Signalen und der Auswertung von GSM-Signalen sein.

Zur Analyse, ob und welche Kanäle durch Mobilfunksysteme benutzt werden, ist es aus der Praxis bekannt, eine separate Mobilfunk-Empfangsvorrichtung zum Empfang und zur Auswertung der von benachbarten Mobilfunksystemen gesendeten Informationen zu integrieren beziehungsweise an das RFID-System anzuschließen. Diese Lösung hat jedoch den Nachteil, dass eine weitere eigene Vorrichtung notwendig ist, die ausschließlich dazu dient, gelegentlich freie Kanäle zu ermitteln.

Zum Stand der Technik (US 2010/0207737) gehört ein Verfahren zur gemeinsamen Nutzung eines Frequenzbandes durch ein Mobilfunksystem und durch ein RFID-System, wobei das Mobilfunksystem der primäre und bevorzugte Nutzer des gemeinsamen Frequenzbandes ist und das RFID-System der sekundäre Nutzer desselben Frequenzbandes ist.

Dieses zum Stand der Technik gehörende Verfahren weist den Nachteil auf, dass das RFID-System bei dem Mobilfunksystem aktiv anfragt, ob ein Kanal frei ist und in welchem Time-Slot der Kanal genutzt werden kann. Das Mobilfunksystem weist dem RFID-System einen Time-Slot im Bereich von wenigen Millisekunden zu, in dem das RFID-System den Frequenzkanal des Mobilfunksystems nutzen darf.
Eine dauerhafte Nutzung des Frequenzkanales ist gemäß diesem Verfahren nicht möglich.

Weiterhin gehört zum Stand der Technik (3rd Generation Partnership Project, Technical Specification Group GSM/EDGE Radio Access Network; Mobile radio interface layer 3 specification; Radio Resource Control (RRC) protocol [Release 9]; 3 GPP Standard TS 44.018, 3RD Generation Partnership Project (3GPP), Mobile Competence Centre; 650; Route des Lucioles; F-06921 Sophia-Antipolis Cedex; FRANCE, Nr. V9.1.0, 1. Mai 2009 (2009-05-02), Seiten 1-422, XP050378563, Seiten 169, 237) ein Standard für ein Mobilfunksystem. Dieser Standard beschäftigt sich nicht mit der Ermittlung freier Kanäle durch ein RFID-System, welches gemeinsame Frequenzbänder mit einem Mobilfunksystem nutzen möchte.

Weiterhin gehört zum Stand der Technik US 2008/309490, 2008-12-19. Dieses Dokument offenbart ein Verfahren zur gemeinsamen Nutzung eines Frequenzbandes bei dem das Mobilfunksystem dem RFID-System jedoch nur kurzfristig Time-slots zur Verfügung stellt.

Das der Erfindung zugrunde liegende technische Problem besteht darin, ein verfahren anzugeben, mit dem ein RFID-System feststellen kann, ob und welche Frequenzkanäle temporär von einem Mobilfunksystem verwendet werden, wobei das Verfahren mit Schreib-/Lesestationen nach dem Stand der Technik ausführbar ist, ohne dass zusätzlich Ressourcen in Form von weiteren Empfangseinheiten benötigt werden.

Dieses technische Problem wird durch ein Verfahren mit den Merkmalen gemäß Anspruch 1 gelöst.

Das erfindungsgemäße Verfahren zur gemeinsamen Nutzung eines Frequenzbandes durch ein Mobilfunksystem und durch ein RFID-System, wobei das Mobilfunksystem der primäre und bevorzugte Nutzer des gemeinsamen Frequenzbandes ist und das RFID-System der sekundäre Nutzer desselben Frequenzbanddes ist, zeichnet sich dadurch aus, dass die dauerhaft benutzten Frequenzkanäle des Mobilfunksystems und die temporär benutzten Frequenzkanäle des Mobilfunksystems durch das RFID-System ermittelt werden, dass wenigstens ein Empfangspegel der Frequenzkanäle von dem RFID-System in wenigstens einem vom Mobilfunksystem benutzten Frequenzband ermittelt wird, dass geprüft wird, ob der wenigstens eine ermittelte Empfangspegel über einem Schwellwert liegt, dass das RFID-System Informationen aus wenigstens einem logischen Kanal des Mobilfunksystems dekodiert und dass das RFID-System aus den Informationen, die aus einem logischen Kanal dekodiert wurden, ermittelt, ob vom Mobilfunksystem temporäre Frequenzkanäle benutzt werden, dass die Information, welche temporären Frequenzkanälen von dem Mobilfunksystem benutzt werden können, in dem RFID-System zwischengespeichert werden und dass, nachdem alle relevanten Frequenzkanäle eines GSM-Frequenzbandes analysiert wurden, das RFID-System anhand der zwischengespeicherten Ergebnisse entscheidet, ob und welcher gemeinsam nutzbare Frequenzkanal noch frei ist und vom RFID-System genutzt werden kann.

Die erfindungsgemäße Lösung zur Erkennung der durch das Mobilfunksystem benutzten Frequenzkanäle vermeidet zusätzliche Ressourcen für das RFID-System beziehungsweise für eine Schreib-/Lesestation, um die durch das Mobilfunksystem kurzzeitig (temporär) benutzten Frequenzen zu ermitteln. Da die Hardware eines RFID-Systems für den UHF-Frequenzbereich nach dem Stand der Technik grundsätzlich in der Lage ist, die von einem Mobilfunksystem gesendeten Frequenzen zu empfangen, kann das erfindungsgemäße Verfahren von einer Schreib-/Lesestation nach dem Stand der Technik ausgeführt werden, indem die Software zur Dekodierung auf die vom Mobilfunksystem ausgesendeten Informationen und Signale angepasst wird und/oder angepasste Funktionalitäten in einer programmierbaren Logikschaltung, beispielsweise eines FPGA (Field Programmable Gate Array) vorgesehen werden.

Gemäß einer vorteilhaften Ausführungsform der Erfindung ist vorgesehen, dass das RFID-System aus Informationen, die aus wenigstens einem Frequenzkanal mit einem den Schwellwert übersteigenden Empfangspegel dekodiert werden, ermittelt, ob vom Mobilfunksystem temporäre Frequenzkanäle benutzt werden. Hierdurch ist es möglich, den lediglich einen Frequenzkanal zu analysieren und hieraus auf weitere temporäre Frequenzkanäle zu schließen.

Eine weitere vorteilhafte Ausführungsform sieht vor, dass das RFID-System ermittelt, welche temporären Frequenzkanäle vom Mobilfunksystem benutzt werden, damit diese Kanäle von dem RFID-System nicht gestört werden.

Gemäß einer weiteren Ausführungsform der Erfindung ist vorgesehen, dass durch das RFID-System Informationen eines logischen Kanales, insbesondere des BCCH (Broadcast Control Channel) eines Mobilfunksystems dekodiert und ausgewertet werden. Die Abfrage des logischen Kanales oder des BCCH-Ka-nales hat den Vorteil, dass auf diesem Kanal durchgehend relevante Informationen übertragen werden (Dauersender), so dass jederzeit diese Informationen abgefragt werden können.

Das RFID-System nutzt dabei die Eigenschaft des Mobilfunksystems, welches auf dem Frequenzkanal, auf dem sich der logische BCCH-Kanal befindet, Informationen überträgt, die Auskunft über die zu diesem BCCH gehörenden Frequenzkanäle geben. Diese Informationen sind zum Beispiel Informationen darüber, ob die zu den BCCH gehörenden logischen Kanäle Frequency-Hopping benutzen und geben Auskunft über die für das Hopping benutzten temporären Frequenzkanäle.

Besonders bevorzugt erfolgt die Dekodierung von Informationen des Mobilfunksystems außerhalb der Transponder-Kommunikation, also nicht parallel zu der Transponder-Kommunikation. Hierdurch wird eine Störung oder Beeinträchtigung der Kommunikation zwischen Transponder und RFID-Schreib-/Lesestation vermieden. Das bedeutet, dass zur Erkennung der Benutzung der Mobilfunk-Frequenzen die gleiche Hardware wie zur Kommunikation mit dem Transponder einsetzbar ist.

Vorteilhaft erfolgt die Dekodierung mit der gleichen Hardware, mit der die Transponder-Kommunikation erfolgt. Durch diese Ausführungsform der Erfindung ist es möglich, dass für das erfindungsgemäße Verfahren Schreib-/Lesestationen eingesetzt werden können, die keine zusätzliche Hardware wie beispielsweise Empfangseinheiten benötigen.

Eine weitere Ausführungsform der Erfindung sieht vor, dass die Hardware zur Dekodierung umkonfiguriert wird. Hierdurch ist es möglich, mit einer einzigen Hardware RFID-Signale und Signale eines Mobilfunksystems zu dekodieren. Es ist nicht erforderlich, zwei verschiedene Vorrichtungen mit der entsprechenden Hardware vorzusehen.

Erfindungsgemäß ist vorgesehen, dass ein RFID-System in einem ersten Schritt überprüft, auf welchem Frequenzkanal ein Empfangssignal mit einem zuvor definierten minimalen Empfangspegel empfangen wird, der anzeigt, dass der Frequenzkanal durch ein anderes Sendesystem benutzt wird.

Hat das RFID-System einen benutzten Frequenzkanal ermittelt, analysiert es die auf dem Frequenzkanal übertragenen logischen Informationen.

Erkennt das RFID-System dabei, dass es sich um einen durch das Mobilfunksystem permanent benutzten Kanal (zum Beispiel einen BCCH-Kanal) handelt, der ein Broadcast sendet, analysiert es den logischen Kanal so lange weiter, bis der logische Kanal Informationen darüber sendet, welche temporären Frequenzkanäle von dem Mobilfunksystem benutzt werden können. Die Information, welche temporären Frequenzkanäle von dem Mobilfunksystem benutzt werden können, wird in dem RFID-System zwischengespeichert.

Da eine Vielzahl von Mobilfunksystemen parallel betrieben wird, analysiert das RFID-System danach alle weiteren infrage kommenden Frequenzkanäle im Frequenzband des Mobilfunksystems, die einen definierten Empfangspegel überschreiten, dahingehend, ob auf diesen Frequenzkanälen ein logischer Kanal Informationen über verwendete temporäre Frequenzkanäle aussendet.

Nachdem alle infrage kommenden Frequenzkanäle hinsichtlich der dort übertragenen logischen Informationen analysiert worden sind, erfolgt im RFID-System eine Auswahl darüber, ob und welche Frequenzkanäle im gemeinsam mit dem Mobilfunksystem benutzten Frequenzband für das RFID-System frei sind.

Die dauerhaft belegten Frequenzen, auf denen der BCCH gesendet wird, können dabei innerhalb des gemeinsam benutzten Frequenzbandes oder auch außerhalb des gemeinsam benutzten Frequenzbandes liegen. Aufgrund der Funktionsweise des Mobilfunksystems ist für das RFID-System klar, in welchem Frequenzband außerhalb des gemeinsam benutzten Frequenzbandes BCCH-Kanäle liegen können, die zu temporären Frequenzkanälen innerhalb des gemeinsam benutzten Frequenzbandes gehören.

Die Analyse der Frequenzkanäle erfolgt dabei vorteilhafter Weise einmal nach dem Einschalten des RFID-Systems. Die Analyse kann dann vorteilhaft in Zeitintervallen wiederholt werden. Diese Analyse der Benutzung muss nicht parallel zum Betrieb und nicht während der Kommunikation mit einem Transponder erfolgen. Das hat den Vorteil, dass zur Erkennung der Benutzung der Mobilfunk-Frequenzen die gleiche Hardware wie zur Kommunikation mit dem Transponder eingesetzt werden kann. Zur Erkennung der benutzten Mobilfunk-Frequenzen ist nur eine andere Auswertung der Signale in der RFID-Schreib-/Lesestation notwendig.

Diese andere Auswertung kann entweder alleine durch eine angepasste Software in der Schreib-/Lesestation erfolgen und/oder durch eine Rekonfiguration von Teilen der Hardware der Schreib-/Lesestation, beispielsweise durch ein entsprechend angepasstes FPGA (Field Programmable Gate Array). So kann das FPGA beispielsweise für die Analyse der Mobilfunk-Kanäle mit einer Konfiguration geladen werden, die speziell für die Dekodierung von Mobilfunk-Signalen ausgelegt ist und nach Abschluss der Suche nach freien Kanälen mit einer Konfiguration geladen wird, welche für die Dekodierung von Signalen von RFID-Transpondern ausgelegt ist.

Erfindungsgemäß ist es vorgesehen, dass das RFID-System zur Feststellung der vom Mobilfunksystem belegten Frequenzen im gemeinsam benutzten Frequenzband zuerst die dauerhaft durch das Mobilfunksystem benutzten Frequenzkanäle ermittelt und dann einige der auf diesen Frequenzen gesendeten logischen Kanäle des Mobilfunksystems dekodiert. Aus den dekodierten Daten, zum Beispiel des BCCH-Kanales, werden dann die weiteren durch das Mobilfunksystem benutzten Kanäle ermittelt. Das RFID-System benutzt dann alle durch das Mobilfunksystem belegten Kanäle und auch eventuell die zu dem vom Mobilfunksystem benutzten Nachbarkanäle nicht.

Der Vorteil des erfindungsgemäßen Verfahrens ist, dass das RFID-System nur einmal die durch das Mobilfunksystem benutzten Frequenzkanäle ermitteln muss. Diese Ermittlung kann sehr kurz, zum Beispiel in weniger als einer Sekunde erfolgen und muss nur sehr selten, zum Beispiel einmal pro Monat oder einmal pro Woche wiederholt werden, da das Mobilfunksystem seine Kanalnutzung praktisch nie ändert.

Um die durch das Mobilfunksystem benutzten Frequenzkanäle zu ermitteln, muss das RFID-System beziehungsweise die RFID-Schreib-/Lesestation nur für sehr kurze Zeit und in sehr großen Zeitintervallen die Kommunikationsfähigkeit mit dem Transponder aufgeben. Diese kurze Unterbrechung der Kommunikationsfähigkeit mit dem Transponder führt zu keiner nennenswerten Funktionsbeeinträchtigung des RFID-Systems. Wenn zum Beispiel eine RFID-Schreib-/Lesestation, die nachts vom Strom getrennt wird, am Morgen nach dem Einschalten der Stromversorgung vor dem Start der Kommunikation mit Transponder das gemeinsam mit dem Mobilfunk benutzte Band nach dem oben beschriebenen Verfahren auf benutzte Mobilfunk-Frequenzkanäle überprüft, führt das zu keiner Beeinträchtigung der RFID-Systemfunktionalität, und gleichzeitig werden alle durch das Mobilfunksystem benutzten Frequenzkanäle sehr gut geschützt.

Gemäß der Erfindung können die vom Mobilfunksystem benutzten Frequenzkanäle innerhalb oder außerhalb des Frequenzbandes des RFID-Systems liegen. Vorteilhaft werden auch die außerhalb des Frequenzbandes des RFID-Systems liegenden Frequenzkanäle von dem RFID-System überprüft, da das RFID-System auch von diesen Kanälen Informationen über temporär benutzte Kanäle des Mobilfunksystems innerhalb des vom RFID-System benutzten Frequenzbandes erhalten kann.

Weitere Merkmale und Vorteile der Erfindung ergeben sich anhand der zugehörigen Zeichnung, in der das erfindungsgemäße Verfahren schematisch nur beispielhaft dargestellt ist. In der Zeichnung zeigen:
- Fig. 1: schematische Darstellung der Belegung der Frequenzbänder;
- Fig. 2: schematische Darstellung des erfindungsgemäßen Verfahrens.

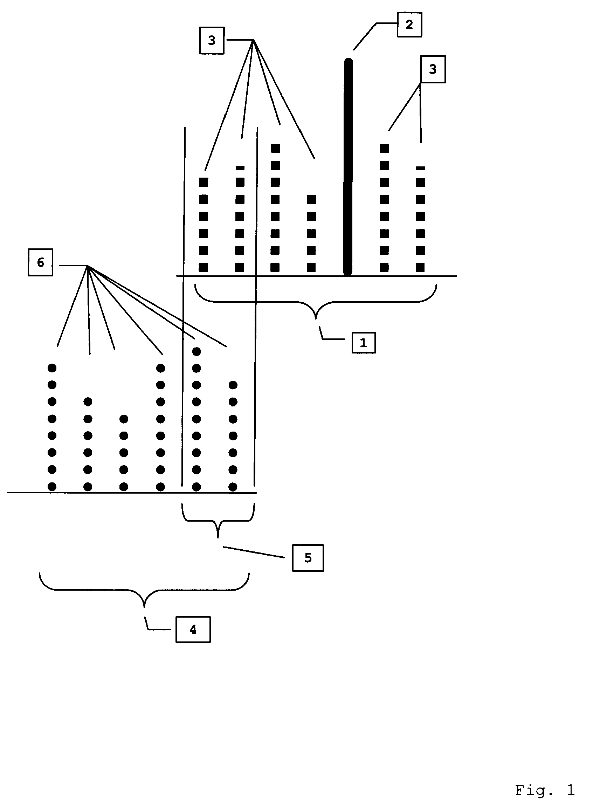

Fig. 1 zeigt ein Frequenzband 1 eines GSM-Systems mit sieben Frequenzkanälen, von denen ein Frequenzkanal ein Dauersender 2 ist, der einen logischen BCCH-Kanal (Broadcast Control Channel) überträgt. Neben dem Dauersender 2 sind in dem GSM-Frequenzband 1 sechs weitere Frequenzkanäle 3 (symbolisiert durch gestrichelte Linien) dargestellt, die von dem GSM-System temporär benutzt werden können.

Ferner zeigt Fig. 1 das Frequenzband 4 eines RFID-Systems, bei dem das RFID-System sechs unterschiedliche Frequenzkanäle 6 (symbolisiert durch Punktlinien) nutzen kann.

Die unteren beiden Frequenzkanäle des Frequenzbandes 1 des GSM-Systems und die oberen beiden Frequenzkanäle des Frequenzbandes 4 des RFID-Systems überschneiden sich in einem Bereich 5, in dem beide Systeme ein gemeinsam nutzbares Frequenzband haben.

Mit der durchgezogenen Linie ist der Frequenzkanal des Dauersenders 2 dargestellt. Die gestrichelten Linien stellen die Frequenzkanäle 3, die von dem GSM-System temporär benutzt werden, dar. Die punktierten Linien 6 bezeichnen die Frequenzkanäle, die von dem RFID-System benutzt werden können.

Bevor das RFID-System einen Frequenzkanal des gemeinsam nutzbaren Frequenzbandes 5 benutzen darf, muss es prüfen, ob der Frequenzkanal durch das GSM-System permanent oder temporär benutzt werden könnte.

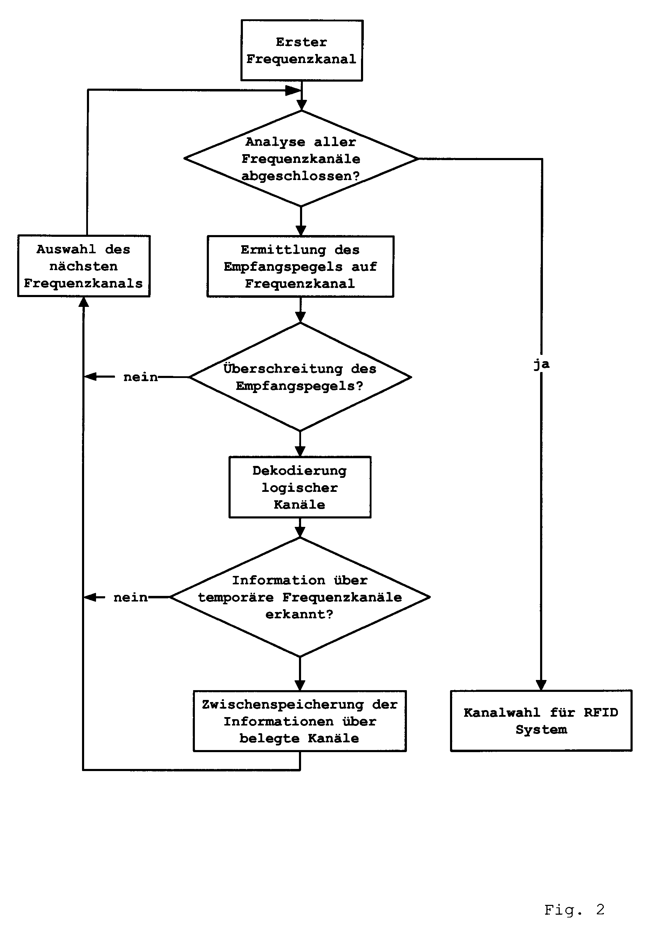

Fig. 2 zeigt beispielhaft einen möglichen Ablauf zur Ermittlung belegter Kanäle durch das RFID-System. Dabei startet das RFID-System mit einem ersten Frequenzkanal und ermittelt zunächst einen Empfangspegel, mit dem ein Signal auf diesem Frequenzkanal empfangen wird. Überschreitet das Empfangssignal einen zuvor definierten Schwellwert, erfolgt eine Dekodierung der Informationen und eine Analyse des logischen Kanales dahingehend, ob Informationen über temporär benutzte Frequenzkanäle enthalten sind. Wurden Informationen über temporär benutzte Frequenzkanäle dekodiert, werden diese Informationen zwischengespeichert.

Danach wird ein nächster Frequenzkanal eingestellt und nach dem oben beschriebenen Verfahren analysiert.

Nachdem alle relevanten Frequenzkanäle des GSM-Frequenzbandes analysiert wurden, kann das RFID-System anhand der zwischengespeicherten Ergebnisse entscheiden, ob und welcher gemeinsam nutzbare Frequenzkanal noch frei ist und vom RFID-System benutzt werden kann.

### Bezugszahlen

- 1: GSM-Frequenzband
- 2: Dauersender
- 3: temporär benutzte Kanäle
- 4: RFID-Frequenzband
- 5: gemeinsam nutzbare Frequenzen
- 6: von dem RFID-System benutzte Kanäle

## Patentansprüche

1. Verfahren zur gemeinsamen Nutzung eines Frequenzbandes durch ein Mobilfunksystem und durch ein RFID-System, wobei das Mobilfunksystem der primäre und bevorzugte Nutzer des gemeinsamen Frequenzbandes ist und das RFID-System der sekundäre Nutzer desselben Frequenzbandes ist,
wobei die dauerhaft benutzten Frequenzkanäle des Mobilfunksystems und die temporär benutzten Frequenzkanäle des Mobilfunksystems durch das RFID-System ermittelt werden, wobei wenigstens ein Empfangspegel der Frequenzkanäle von dem RFID-System in wenigstens einem vom Mobilfunksystem benutzten Frequenzband (1) ermittelt wird, dass geprüft wird, ob der wenigstens eine ermittelte Empfangspegel über einem Schwellwert liegt, wobei, wenn der Empfangspegel über einem Schwellwert liegt, das RFID-System auf dem Frequenz-kanal übertragene Informationen aus wenigstens einem logischen Kanal des Mobilfunksystems auf dem Frequenzband dekodiert und wobei das RFID-System aus den Informationen, die aus einem logischen Kanal dekodiert wurden, ermittelt, ob vom Mobilfunksystem temporäre Frequenzkanäle (3) benutzt werden, wobei die Information, welche temporären Frequenzkanäle von dem Mobilfunksystem benutzt werden können, in dem RFID-System zwischengespeichert werden und wobei, nachdem alle relevanten Frequenzkanäle eines GSM-Frequenzbandes analysiert wurden, das RFID-System anhand der zwischengespeicherten Ergebnisse entscheidet, ob und welcher gemeinsam nutzbare Frequenzkanal noch frei ist und vom RFID-System genutzt werden kann.

2. Verfahren nach Anspruch 1, **dadurch gekennzeichnet, dass** das RFID-System ermittelt, welche temporären Frequenzkanäle (3) vom Mobilfunksystem benutzt werden.

3. Verfahren nach Anspruch 1, **dadurch gekennzeichnet, dass** das RFID-System Informationen des BCCH (Broadcast Control Channel) eines Mobilfunksystems dekodiert und auswertet.

4. Verfahren nach einem der vorhergehenden Ansprüche, **dadurch gekennzeichnet, dass** die Dekodierung außerhalb einer Transponder-Kommunikation erfolgt.

5. Verfahren nach einem der Ansprüche 1 bis 3, **dadurch gekennzeichnet, dass** die Dekodierung mit der gleichen Hardware erfolgt, mit der die Transponder-Kommunikation erfolgt.

6. Verfahren nach einem der Ansprüche 1 bis 3, **dadurch gekennzeichnet, dass** die Hardware zur Dekodierung umkonfiguriert wird.

7. Verfahren nach einem der vorhergehenden Ansprüche, **dadurch gekennzeichnet, dass** die vom Mobilfunksystem benutzten Frequenzkanäle (3) innerhalb oder außerhalb des Frequenzbandes (4) des RFID-Systems liegen.

## Claims

1. Method for joint use of a frequency band by a mobile radio system and by an RFID system, wherein the mobile radio system is the primary and preferred user of the joint frequency band and the RFID system is the secondary user of the same frequency band, wherein the permanently used frequency channels of the mobile radio system and the temporarily used frequency channels of the mobile radio system are determined by the RFID system, wherein at least one reception level of the frequency channels is determined by the RFID system in at least one frequency band (1) used by the mobile radio system, that is checked whether the at least one determined reception level is above a threshold value, wherein, if the reception level is above a threshold value, the RFID system decodes information, transmitted on the frequency channel, from at least one logical channel of the mobile radio system on the frequency band and wherein the RFID system determines, from the information which has been decoded from a logical channel, whether temporary frequency channels (3) are used by the mobile radio system, wherein the information regarding which temporary frequency channels can be being used by the mobile radio system is temporarily stored in the RFID system and wherein, after all the relevant frequency channels of a GSM frequency band have been analysed, the RFID system decides on the basis of the temporarily stored results whether and which jointly usable frequency channel is still free and can be used by the RFID system.

2. Method according to claim 1, **characterised in that** the RFID system determines which temporary frequency channels (3) are used by the mobile radio system.

3. Method according to claim 1, **characterised in that** the RFID system the RFID system decodes and evaluates information of the BCCH (Broadcast Control Channel) of a mobile radio system.

4. Method according to one of the preceding claims, **characterised in that** the decoding takes place outside a transponder communication.

5. Method according to one of claims 1 to 3, **characterised in that** the decoding takes place with the same hardware with which the transponder communication takes place.

6. Method according to one of claims 1 to 3, **characterised in that** the hardware is reconfigured for the decoding.

7. Method according to one of the preceding claims, **characterised in that** the frequency channels (3) used by the mobile radio system are within or outside the frequency band (4) of the RFID system.

## Revendications

1. Procédé d'exploitation commune d'une bande de fréquence par un système de téléphonie mobile et un système RFID, le système de téléphonie mobile étant l'utilisateur primaire et privilégié de la bande de fréquence commune et le système RFID étant l'utilisateur secondaire de cette même bande de fréquence,
les canaux de fréquences utilisés en permanence du système de téléphonie mobile et les canaux de fréquences utilisés temporairement du système de téléphonie mobile étant déterminés par le système RFID, au moins un niveau de réception des canaux de fréquences étant déterminé par le système RFID dans au moins une bande de fréquence (1) utilisée par le système de téléphonie mobile, de façon à contrôler si l'au moins un niveau de réception déterminé est au-dessus d'une valeur seuil, et, lorsque le niveau de réception est au-dessus d'une valeur seuil, le système RFID décodant, sur le canal de fréquence, des informations transmises provenant d'au moins un canal logique du système de téléphonie mobile sur la bande de fréquence et le système RFID déterminant, à partir des informations qui ont été décodées à partir d'un canal logique, si des canaux de fréquences temporaires (3) sont utilisés par le système de téléphonie mobile, l'information indiquant quels canaux de fréquences temporaires peuvent être utilisés par le système de téléphonie mobile, étant enregistrée de manière intermédiaire dans le système RFID et, une fois tous les canaux de fréquences pertinents d'une bande de fréquence GSM ont été analysés, le système RFID décide, à l'aide des résultats enregistrés de manière intermédiaire, si et quel canal de fréquence utilisable en commun est encore libre et peut être utilisé par le système RFID.

2. Procédé selon la revendication 1, **caractérisé en ce que** le système RFID détermine quels canaux de fréquences temporaires (3) sont utilisés par le système de téléphonie mobile.

3. Procédé selon la revendication 1, **caractérisé en ce que** le système RFID décode et analyse les informations du BCCH (Broadcast Control Channel) d'un système de téléphonie mobile.

4. Procédé selon l'une des revendications précédentes, **caractérisé en ce que** le décodage a lieu à l'extérieur d'une communication de transpondeur.

5. Procédé selon l'une des revendications 1 à 3, **caractérisé en ce que** le décodage a lieu avec le même hardware que celui avec lequel la communication de transpondeur est effectuée.

6. Procédé selon l'une des revendications 1 à 3, **caractérisé en ce que** le hardware est reconfiguré pour le décodage.

7. Procédé selon l'une des revendications précédentes, **caractérisé en ce que** les canaux de fréquences (3) utilisés par le système de téléphonie mobile se trouvent à l'intérieur ou à l'extérieur de la bande de fréquence (4) du système RFID.
